(19) Europäisches Patentamt / European Patent Office / Office européen des brevets

(11) **EP 3 353 501 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(51) Int Cl.:
***G01D 5/353*** *(2006.01)*     ***G01B 11/16*** *(2006.01)*
***G01L 1/24*** *(2006.01)*

(21) Anmeldenummer: **16769989.1**

(22) Anmeldetag: **20.09.2016**

(86) Internationale Anmeldenummer:
**PCT/EP2016/072309**

(87) Internationale Veröffentlichungsnummer:
**WO 2017/050767 (30.03.2017 Gazette 2017/13)**

(54) **LICHTLEITER-EINSPANNVORRICHTUNG, FASEROPTISCHER SENSOR UND HERSTELLUNGSVERFAHREN**

LIGHT GUIDE CLAMPING DEVICE, FIBRE OPTIC SENSOR AND PRODUCTION METHOD

DISPOSITIF DE SERRAGE D'UN GUIDE D'ONDES LUMINEUSES, CAPTEUR À FIBRE OPTIQUE ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015 DE 102015115925**

(43) Veröffentlichungstag der Anmeldung:
**01.08.2018 Patentblatt 2018/31**

(73) Patentinhaber: **FOS4X GmbH**
**81371 München (DE)**

(72) Erfinder:
• **MÜLLER, Mathias**
**81541 München (DE)**
• **ZELENKA, Fabian**
**80807 München (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
EP-A1- 1 679 497     EP-A1- 2 295 946
WO-A1-01/35133     DE-A1- 19 922 102

**Beschreibung**

TECHNISCHES GEBIET

Ausführungsformen der vorliegenden Erfindung betreffen im Allgemeinen faseroptische Sensoren, und betreffen insbesondere eine Einspannvorrichtung für einen Lichtleiter, welcher einen faseroptischen Sensor beinhaltet. Ferner betreffen Ausführungsformen der vorliegenden Erfindung einen faseroptischen Sensor zum Messen von Dehnungen und/oder Stauchungen sowie ein Verfahren zum Herstellen eines faseroptischen Sensors.

STAND DER TECHNIK

Fasersensoren sind im Allgemeinen als Messeinrichtungen ausgelegt, bei welchen eine Messgröße mittels einer durch einen Lichtleiter übertragenen optischen Strahlung optisch erfasst wird. Fasersensoren können hierbei als extrinsische Sensoren ausgelegt sein, bei welchem der Lichtleiter lediglich einem Transport der optischen Strahlung dient. Weit verbreitet ist ferner die Auslegung faseroptischer Sensoren als intrinsische Sensoren, bei welchen das Sensorelement wie beispielsweise ein Faser-Bragg-Gitter (FBG) in der Sensorfaser selbst enthalten ist. Durch die optische Übertragung der Messgröße über den Lichtleiter sind die faseroptischen Sensoren im Wesentlichen unanfällig gegenüber äußeren Einflüssen wie etwa elektromagnetischen Feldern. Darüber hinaus weisen faseroptische Sensoren eine gute elektromagnetische Verträglichkeit (EMV) auf.

Ein intrinsischer faseroptischer Sensor reagiert empfindlich auf eine mechanische Strukturänderungen wie beispielsweise eine Dehnung und/oder eine Stauchung sowie auf Temperaturvariationen. Zur Messung einer zu erfassenden Größe wird der Sensor bzw. das faseroptische Sensorelement auf eine geeignete Weise mit einem Messobjekt wie beispielsweise einem Rotorblatt einer Windkraftanlage verbunden, wobei unerwünschte Einflüsse kompensiert und Messempfindlichkeiten eingestellt werden müssen. Es ist daher erstrebenswert, faseroptischen Sensoren weiter zu verbessern. WO 01/35133 A1 beschreibt einen kompakten athermischen optischen Wellenleiter mit Verwendung von thermischer Expansionsverstärkung; DE 19922102 A1 beschreibt eine Faser-Bragg-Sensoranordnung zur Ermittlung physikalischer Größen; EP 1679497 A1 beschreibt einen passiven athermischen Dehnungssenor basierend auf einem Faser-Bragg-Gitter; EP 2295946 A1 beschreibt einen athermischen Faser-Bragg-Gitter-Dehnungssensor.

ZUSAMMENFASSUNG DER ERFINDUNG

Zur Lösung der erfindungsgemäßen Aufgabe werden eine Einspannvorrichtung für einen Lichtleiter mit den Merkmalen von Anspruch 1, ein Sensor zum Messen von Dehnungen und/oder Stauchungen eines Messobjekts mit den Merkmalen von Anspruch 9 und ein Verfahren zur Herstellung eines Sensors mit den Merkmalen von Anspruch 11 angegeben.

Vorteilhafte Weiterbildungen ergeben sich aus den Unteransprüchen.

Der Fachmann wird feststellen, dass einige Elemente der folgenden Beschreibung nicht unter den Geltungsbereich der Ansprüche fallen. Soweit eine derartige Diskrepanz besteht, ist die entsprechende Offenbarung als bloße unterstützende Offenbarung zu verstehen, die nicht Teil der Erfindung ist. Die Erfindung wird durch den Gegenstand der Ansprüche bestimmt. KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1 zeigt schematisch eine Einspannvorrichtung für einen Lichtleiter in einer Seitenansicht, gemäß einer Ausführungsform;

Figur 2 zeigt einen faseroptischen Sensor zum Messen von Dehnungen und/oder Stauchungen eines zu überwachenden Messobjekts, gemäß einer Ausführungsform;

Figur 3A zeigt schematisch Teile einer Einspannvorrichtung für einen Lichtleiter in einer perspektivischen Ansicht schräg von oben;

Figur 3B zeigt schematisch Teile einer Einspannvorrichtung für einen Lichtleiter mit angebrachtem Abdeckelement und eingelegtem Lichtleiter in einer perspektivischen Ansicht schräg von unten;

Figur 4 zeigt schematisch einen Teil einer Windkraftanlage mit Rotorblättern und daran angebrachten faseroptischen Sensoren;

Figur 5 zeigt schematisch einen Messaufbau für einen faseroptischen Sensor gemäß hier beschriebenen Ausführungsformen;

Figur 6 zeigt schematisch einen Messaufbau für einen faseroptischen Sensor gemäß hier beschriebenen Ausführungsformen; und

Figur 7 zeigt ein Ablaufdiagramm zur Veranschaulichung eines Verfahrens zum Herstellen eines Sensors zum Messen von Dehnungen und/oder Stauchungen eines zu überwachenden Messobjekts, gemäß hier beschriebenen Ausführungsformen.

In den Zeichnungen bezeichnen gleiche Bezugszeichen gleiche oder funktionsgleiche Komponenten oder Schritte.

WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

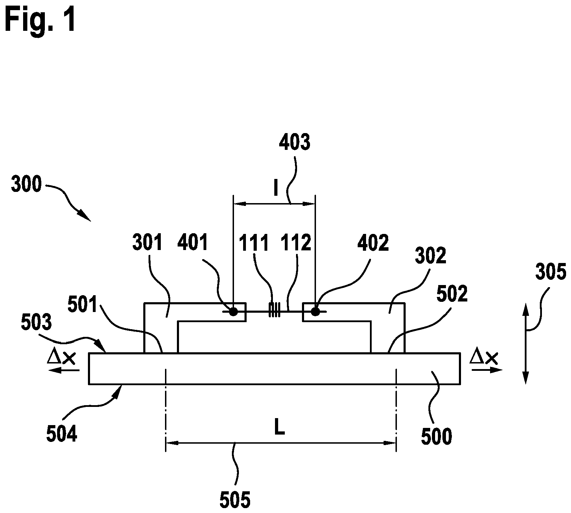

Figur 1 zeigt schematisch eine Einspannvorrichtung 300 für einen Lichtleiter 112 in einer Seitenansicht, gemäß einer Ausführungsform. Die Einspannvorrichtung 300 beinhaltet eine Trägerstruktur, welche ein erstes Befestigungselement 301 zur Befestigung des Lichtleiters 112 an einer ersten Position 401 und ein von dem ersten Befestigungselement 301 beabstandetes zweites Befestigungselement 302 zur Befestigung des Lichtleiters 112 an einer zweiten Position 401 aufweist. Zwischen den beiden Positionen 401, 402 weist der Lichtleiter 112 ein Sensorelement 111 auf. Gemäß einer Ausführungsform, welche mit anderen hierin beschriebenen Ausführungsformen kombiniert werden kann, ist das Sensorelement 111 als ein Faser-Bragg-Gitter ausgelegt. Insbesondere ist die Trägerstruktur der Einspannvorrichtung 300 ausgelegt zur Aufnahme eines Lichtleiters 112, welcher mindestens ein zwischen den Befestigungselementen 301, 302 positionierbares Faser-Bragg-Gitter aufweist. Es sei darauf hingewiesen, dass das Sensorelement 111 innerhalb des Lichtleiters 112 in Form eines intrinsischen Sensors angeordnet ist und in Figur 1 nicht maßstabsgetreu dargestellt ist.

Die Trägerstruktur kann ein Material enthalten, welches gewählt ist aus der Gruppe, die besteht aus CFK, GFK, Stahl, Aluminium, Kunststoff, einer Legierung, und jedweder Kombination davon.

Gemäß einer Ausführungsform, welche mit hierin beschriebenen Ausführungsformen kombiniert werden kann, weist mindestens eines der Befestigungselemente 301, 302 eine Aussparung zum Einlegen und Fixieren des Lichtleiters 112 auf. Gemäß einer weiteren Ausführungsform wird der Lichtleiter 112 an den Befestigungspositionen 401, 402 mit den Befestigungselementen 301, 302 verklebt.

Die ersten und zweiten Positionen 401, 402, an welchen der Lichtleiter 112 an dem ersten Befestigungselement 301 bzw. an dem zweiten Befestigungselement 302 angebracht ist, weisen einen ersten Abstand 403 in einer Längserstreckung des Lichtleiters 112 auf. Ferner ist ein Zwischenträger 500 mit einer ersten Fläche 503, auf welchem die ersten und zweiten Befestigungselemente 301, 302 an jeweiligen Befestigungspositionen 501, 502 angebracht sind, und einer gegenüberliegenden zweiten Fläche 504 vorgesehen, welche an einem Messobjekt (nicht gezeigt) anbringbar ist.

Beispielsweise ist die Trägerstruktur aus einem metallischen Material ausgeführt. Gemäß einer Ausführungsform ist der Zwischenträger 500 aus GFK oder CFK ausgeführt. Eine Materialkombinationen des Materials des Zwischenträgers 500 und des Materials der Befestigungselemente 301, 302 wird so gewählt, dass eine Temperaturkompensation erreicht wird. Gemäß noch einer weiteren Ausführungsform, welche mit anderen hierin beschriebenen Ausführungsformen kombiniert werden kann, sind der erste Abstand 403, der zweite Abstand 505, ein Material der Trägerstruktur und ein Material des Zwischenträgers 500 derart gewählt, dass eine passive Temperaturkompensation für einen an der Trägerstruktur befestigten faseroptischen Sensor 110 bereitgestellt wird.

Weiterhin ist es möglich, den thermischen Ausdehnungskoeffizienten der Trägerstruktur und den thermischen Ausdehnungskoeffizienten des Zwischenträgers 500 derart auszulegen bzw. aneinander anzupassen, dass die passive Temperaturkompensation für einen an der Trägerstruktur befestigten faseroptischen Sensor 110 bereitgestellt wird. Auf diese Weise der Vorteil erzielt, dass eine thermische Ausdehnung des Zwischenträgers 500 zumindest teilweise durch eine thermische Ausdehnung der Trägerstruktur kompensiert wird. Mit anderen Worten wird durch eine Ausführungsform, welche mit anderen hierin beschriebenen Ausführungsformen kombiniert werden kann, eine Temperaturkompensation bereitgestellt, welche dazu führt, dass bei einer Temperaturänderung der erste Abstand 403 im Wesentlichen konstant bleibt.

Obwohl in Figur 1 nur ein einziges Sensorelement 111 gezeigt ist, ist zu verstehen, dass die vorliegende Erfindung nicht auf eine Datenerfassung aus einem einzelnen Sensorelement 111 beschränkt ist, sondern dass entlang des Lichtleiters 112 eine Vielzahl von Sensorelementen 111 angeordnet sein können. Figur 1 zeigt es somit nur einen Abschnitt eines optischen Wellenleiters, welcher als Sensorfaser, optische Faser bzw. Lichtleiter 112 ausgebildet sein kann. Ein derartiges Sensorelement 111 ist beispielsweise empfindlich auf eine Faserdehnung bzw. eine Faserstauchung (siehe Pfeile $\Delta x$ in Figur 1). In den Lichtleiter 112 eintretende optische Strahlung wird somit mit einem veränderten Wellenlängenverlauf aus dem Sensorelemente 111 reflektiert. Ein derartiger veränderter Wellenlängenverlauf wird bestimmt durch die mechanische Belastung des Sensorelementes 111 sowie durch Temperatureffekte.

Gemäß einer Ausführungsform, welche mit anderen hierin beschriebenen Ausführungsformen kombiniert werden kann, ist ein zweiter Abstand 505 der Befestigungspositionen 501, 502 der Befestigungselemente 301, 302 auf dem Zwischenträger 500 in einer Längsrichtung des Lichtleiters 112 größer ist als der erste Abstand 403. Auf diese Weise wird eine Wandlerstruktur bereitgestellt, welche eine hebelfreie mechanische Signalverstärkungsanordnung aufweist. Im Folgenden wird unter Bezugnahme auf Figur 1 eine derartige Signalverstärkung erläutert. Es sei angenommen, dass sich der auf einem Messobjekt angebrachte Zwischenträger 500 zusammen mit dem Messobjekt in einer durch Pfeile $\Delta x$ angezeigten Richtung dehnt. Hierbei ist die relative Längenänderung E des Zwischenträgers 500 bezogen auf den zweiten Abstand 505 bzw. L gegebenen durch die folgende Gleichung:

$$E = \Delta x \ / \ L \qquad\qquad (1)$$

Weiterhin dehnt sich das Sensorelement 111 zusammen mit dem Lichtleiter 112 zwischen der ersten Position 401 und der zweiten Position 402 mit einer relativen Längenänderung $\varepsilon$ gemäß der folgenden Gleichung:

$$\varepsilon = \Delta x \ / \ l \qquad\qquad (2)$$

Die vom Sensorelement 111 erfasste relative Dehnung $\varepsilon$ ergibt sich mit den obigen Gleichungen (1) und (2) zu:

$$\varepsilon = E \ (L/l) \qquad\qquad (3)$$

Auf diese Weise wird die auf das Messobjekt aufgebrachte relative Dehnung um den Faktor (L/1) vergrößert, so dass durch eine derartige Wandlerstruktur eine Signalverstärkung bzw. eine hebelfreie mechanische Signalverstärkungsanordnung bereitgestellt wird. Das heißt, dass die auf das Sensorelement 111 aufgebrachte relative Längenänderung $\varepsilon$ größer ist als die auf den Zwischenträger 500 aufgebrachte relative Längenänderung E. Hierdurch besteht die Möglichkeit, dass die Messauflösung erheblich verbessert wird. Es sei daraufhingewiesen, dass die oben beschriebene Signalverstärkung umgekehrt auch auf Stauchungen des Zwischenträgers 500 durch das Messobjekt anwendbar ist. Insbesondere bilden die Befestigungselemente 301, 302 zusammen mit dem Zwischenträger 500 eine über die Größen 1 und L einstellbare Wandlerstruktur mit einer hebelfreien mechanischen Signalverstärkungsanordnung.

Gemäß einer weiteren Ausführungsform, welche mit anderen hierin beschriebenen Ausführungsformen kombiniert werden kann, kann die Wandlerstruktur mit eingestellter hebelfreier mechanischer Signalverstärkungsanordnung derart ausgelegt werden, dass sich zusammen mit den thermischen Ausdehnungskoeffizienten der Materialien der Trägerstruktur eine passive Temperaturkompensation ergibt, insbesondere dann, wenn die Einspannvorrichtung 300 auf dem zu überwachenden Messobjekt aufgebracht wird.

Gemäß einer weiteren Ausführungsform, welche mit anderen hierin beschriebenen Ausführungsformen kombiniert werden kann, kann eine Sensorfaser bzw. der Lichtleiter 112 in Bezug auf die Längsrichtung des Lichtleiters 112 abgewinkelt zu einer Auswerteeinheit (in Figur 1 nicht gezeigt) abgeführt werden. Insbesondere kann eine einseitige Abführung des Lichtleiters 112 über ein robustes Kabel erfolgen. Um Reflexionen an dem anderen Ende des Lichtleiters 112 zu vermeiden, kann ein Terminator bereitgestellt werden, der auf einer der Abführung gegenüberliegenden Seite des Sensorelements 111 angebracht ist.

Durch die Bereitstellung des Zwischenträgers 500 mit der Möglichkeit einer großflächigen Aufbringung auf einem zu überwachenden Messobjekt wird dessen Objektdehnung über einen größeren Bereich gemittelt. Dies hat den Vorteil, dass Unstetigkeiten im Material des Messobjekts ausgeglichen werden können. Ferner ist es auf einfache Weise möglich, den Zwischenträger 500 zusammen mit dem gesamten Sensor 110 auf dem Messobjekt durch Verkleben aufzubringen.

Je nach Auslegung des Zwischenträgers 500 und/oder der ersten und zweiten Befestigungselemente bei 301, 302 ergibt sich eine einstellbare Sensorhöhe 305. Gemäß einer weiteren Ausführungsform, welche mit hierin beschriebenen Ausführungsformen kombiniert werden kann, kann das Anbringen der Trägerstruktur auf dem Zwischenträger 500 und/oder das Anbringen des Zwischenträgers 500 auf dem zu überwachenden Messobjekt mittels Kleben, Löten, Bondieren oder Laserschweißen durchgeführt werden.

Um einen faseroptischen Sensor, welcher in einer wie in Figur 1 gezeigten Einspannvorrichtung 300 angeordnet ist, besonders einfach beispielsweise an einem Rotorblatt einer Windkraftanlage anbringen zu können, ist es von Vorteil, wenn der faseroptische Sensor in einem Querschnitt senkrecht zum Lichtleiter 112 in Figur 1 eine geringe Abmessung 305 aufweist. Zum Beispiel kann eine maximale Abmessung 305 in einem Querschnitt senkrecht zur Achse des Lichtleiter 112 10 mm oder weniger betragen, und kann insbesondere 5 mm oder weniger betragen. Durch die Ausgestaltung, wie sie in Bezug auf Figur 1 dargestellt ist, kann eine solche Dimensionierung einfach realisiert werden.

Um einen wie in Figur 1 gezeigten Sensor zum Messen von Dehnungen und/oder Stauchungen eines zu überwachenden Messobjekts herzustellen, sind im Wesentlichen die folgenden Schritte erforderlich: Bereitstellen einer Trägerstruktur mit einem ersten und einem zweiten Befestigungselement 301, 302, Verlegen eines Lichtleiters 112 zwischen den ersten und zweiten Befestigungselementen 301, 302, Befestigen des Lichtleiters 112 an den Befestigungselementen 301, 302, Vorspannen des Lichtleiters 112 mittels eines zwischen den Befestigungselementen 301, 302 angeordneten elastischen Elements 506, und Anbringen der Trägerstruktur auf einem Zwischenträger 500.

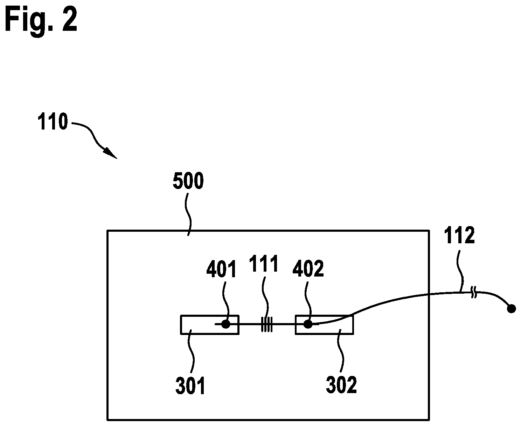

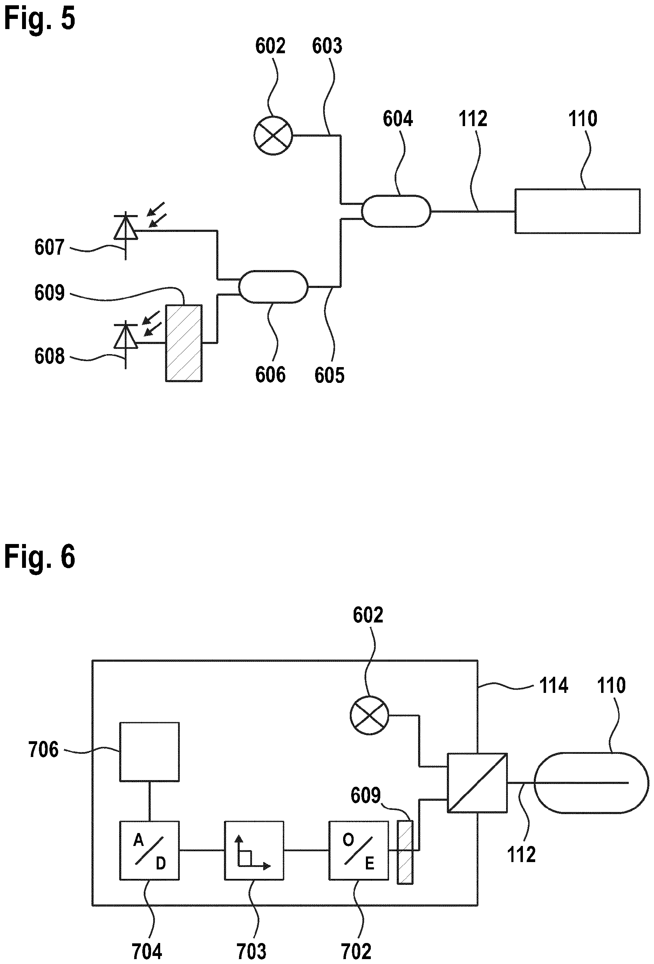

Figur 2 zeigt einen faseroptischen Sensor 110 zum Messen von Dehnungen und/oder Stauchungen eines zu überwachenden Messobjekts. Der Sensor 110 beinhaltet einen Lichtleiter 112 mit einem Faser-Bragg-Gitter 111, wobei der Lichtleiter 112 in einer in Figur 1 dargestellten Einspannvorrichtung 300 eingespannt ist. Die in Figur 1 dargestellte Einspannvorrichtung 300 ist in einer Draufsicht gezeigt. Zumindest ein Ende des Lichtleiters 112 wird zur Messung von Dehnungen und/oder Stauchungen mit einer unter Bezugnahme auf Figur 6 untenstehend beschriebenen Auswerteeinheit verbunden. Es sei darauf hingewiesen, dass neben einer Auswertung des durch das Sensorelement 111 reflektierten Lichts das durch das Sensorelement 111 transmittierte Licht in der Auswerteeinheit analysiert werden kann.

Um einen faseroptischen Sensor, wie er zum Beispiel in Figur 1 dargestellt ist, besonders einfach an einem Rotorblatt, insbesondere in einem äußeren radialen Bereich, zur Verfügung zu stellen, ist es von Vorteil, wenn der faseroptische Sensor in einem Querschnitt senkrecht zum Lichtleiter 112 in Figur 1 eine geringe Abmessung 305 aufweist. Zum Beispiel kann eine maximale Abmessung 305 in einem Querschnitt senkrecht zur Achse des Lichtleiter 112 10 mm oder weniger betragen, und kann insbesondere 5 mm oder weniger betragen. Durch die Ausgestaltung, wie sie in Bezug auf Figur 1 dargestellt ist, kann eine solche Dimensionierung einfach realisiert werden.

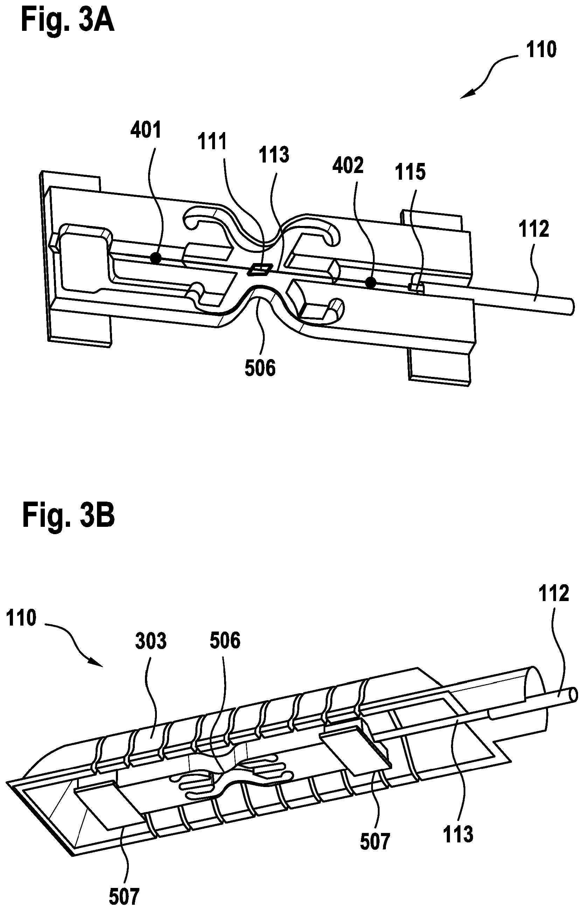

Die Figuren 3A und 3B zeigen weitere Ansichten von Teilen eines faseroptischen Sensors 110 aus unterschiedlichen Blickwinkeln, zur Verdeutlichung einer typischen Ausführungsform. Figur 3A zeigt schematisch eine Trägerstruktur für einen Lichtleiter 112 in einer perspektivischen Ansicht schräg von oben, und Figur 3B zeigt schematisch eine Trägerstruktur einen Lichtleiter 112 mit angebrachtem Abdeckelement 303 und eingelegtem Lichtleiter 112 in einer perspektivischen Ansicht schräg von unten, das heißt von der Seite, an welcher bei Sensorbetrieb das Messobjekt angebracht ist. Durch die Bereitstellung des Abdeckelements 303 wird der Vorteil erzielt, dass der faseroptische Sensor 110 sowie die Trägerstruktur gegen Beschädigung geschützt werden. Gemäß einer Ausführungsform ist die Trägerstruktur zwischen einem Zwischenträger (in den Figuren 3A und 3B nicht gezeigt) und dem Abdeckelement 303 zur Verfügung gestellt. Somit bietet das angebrachte Abdeckelement 303 einen Schutz vor äußeren Krafteinwirkungen, insbesondere einen Trittschutz. Gemäß einer weiteren Ausführungsform, welche mit hierin beschriebenen Ausführungsformen kombiniert werden kann, wird zum Schutz des faseroptischen Sensors 110 vor Umwelteinflüssen ferner eine Schicht aus weichem Gummi auf dem Abdeckelement 303 aufgebracht.

Der Lichtleiter 112 weist einen Lichtleiterkern 113 mit dem beispielsweise als Faser-Bragg-Gitter ausgebildeten Sensorelement 111 und einen Lichtleitermantel 115 auf. Gemäß Ausführungsformen, welche mit anderen hierin beschriebenen Ausführungsformen kombiniert werden können, weist die Trägerstruktur ferner mindestens ein zwischen den ersten und zweiten Befestigungselementen 301, 302 angeordnetes elastisches Element 506 auf, welches ausgelegt ist, einen an den Befestigungselementen 301, 302 bzw. den ersten und zweiten Positionen 401, 402 befestigten Lichtleiter 112 in seiner Längsrichtung vorzuspannen. Wie in Figur 3A dargestellt, kann die Trägerstruktur das elastische Element 506 beinhalten. Auf diese Weise ist es möglich, neben Faser-Dehnungen auch Faser-Stauchungen zu mittels optischer Signale zu erfassen. Mit anderen Worten wird der Vorteil erzielt, dass das elastische Element 506 ein an der Trägerstruktur angebrachtes Faser-Bragg-Gitter derart vorspannt, dass dieses sowohl Dehnungen als auch Stauchungen detektiert. Somit ist es möglich, durch die erzielte Vorspannung des Lichtleiters 112 zusammen mit dem faseroptischen Sensorelement 111 positive und negative Dehnungen zu erfassen. Weiterhin ermöglicht die Vorspannung der optischen Sensorfaser eine Erkennung eines Zustands, wenn eine Faser gerissen ist oder sich aus den Befestigungspunkten 401, 402 an einem oder beiden der Befestigungselemente 301, 302 gelöst hat. In vorteilhafter Weise ermöglicht eine derartige Vorspannung des Lichtleiters 122 demnach sowohl ein Erfassen einer Stauchung als auch ein Erfassen eines Ablösens des Lichtleiters 112 von einem Befestigungselement 301, 302.

Gemäß weiteren Ausführungsformen, welche mit hierin beschriebenen Ausführungsformen kombiniert werden können, kann die Trägerstruktur zusammen mit dem elastischen Element 506 einstückig ausgeführt werden.

Wie in Figur 3B dargestellt, weist die Trägerstruktur Flächen 507, d.h. Verbindungsflächen zum Zwischenträger 500 auf, die an dem Zwischenträger 500 befestigt werden können. Eine derartige Befestigung kann beispielsweise eine Klebeverbindung oder eine Lötverbindung sein. Die Flächen 507 stimmen mit den in Figur 1 gezeigten ersten und zweiten Befestigungspositionen 501, 502 überein.

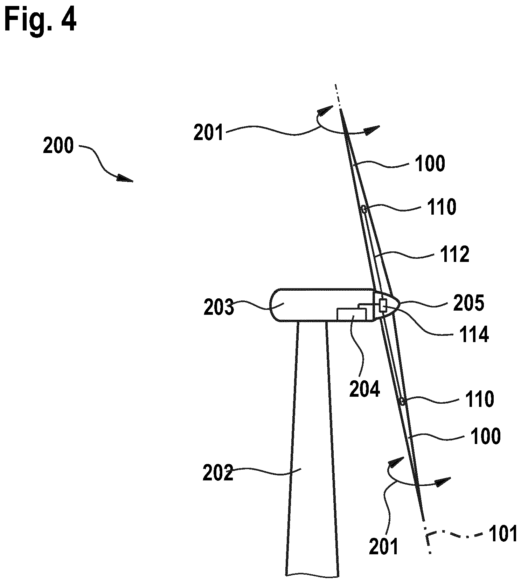

Figur 4 zeigt eine Windkraftanlage 200. Die Windkraftanlage 200 beinhaltet einen Turm 202 und eine Gondel 203. An der Gondel 203 ist der Rotor 500 befestigt. Der Rotor 500 beinhaltet eine Nabe 205, an der die Rotorblätter 100 befestigt sind. Gemäß typischen Ausführungsformen hat der Rotor 500 zumindest zwei Rotorblätter, insbesondere drei Rotorblätter. Beim Betrieb der Windenergieanlage bzw. der Windkraftanlage rotiert der Rotor 500, d.h. die Nabe 205 mit den Rotorblättern 100 um eine Achse. Dabei wird ein Generator zur Stromerzeugung angetrieben. Um einen faseroptischen Sensor 110 beispielsweise in einer Windkraftanlage einzusetzen, kann der faseroptische Sensor 110, wie er zum Beispiel in den Figuren 3A und 3B dargestellt ist, an einem Rotorblatt 100, insbesondere in einem äußeren radialen Bereich, zur Verfügung gestellt werden. Hierbei ist es von Vorteil, wenn der faseroptische Sensor 110 in einem Querschnitt senkrecht zum Lichtleiter 112 in Figur 1 eine geringe Abmessung aufweist. Zum Beispiel kann eine maximale Abmessung in einem Querschnitt senkrecht zur Achse des Lichtleiter 112 10 mm oder weniger betragen. Durch die Ausgestaltung, wie sie in Bezug auf Figur 1 dargestellt ist, kann eine solche Dimensionierung einfach realisiert werden.

Wie in Figur 4 dargestellt, ist zumindest ein faseroptischer Sensor 110 an einem Rotorblatt 100 zur Verfügung gestellt. Der Sensor 110 ist über eine Signalleitung bzw. einen Lichtleiter 112 mit einer Auswerteeinheit 114 verbunden. Die Auswerteeinheit 114 liefert z.B. ein Signal an eine Steuerungseinheit 204 der Windkraftanlage 200.

Hierbei ist es beispielsweise für den Einsatz in Rotorblättern von Windkraftanlagen bzw. für die Verfahren zur Überwachung von Windkraftanlagen besonders günstig, dass eine Dehnung und/oder einen Stauchung in einer Richtung senkrecht zur Längserstreckung des Lichtleiters 112 gemessen wird. Windenergieanlagen unterliegen einer komplexen Steuerung, die zum Beispiel durch wechselnde Betriebsbedingungen notwendig sein kann. Bei der Überwachung von Betriebszuständen von Windenergieanlagen wird eine Mehrzahl von Sensoren verwendet. Zum Beispiel können Dehnungs- bzw. Stauchungsmessungen an einem Rotorblatt 100 zur Messung der Biegung des Rotorblatts 100 durchgeführt werden.

Durch die mit dem Betrieb einer Windkraftanlage verknüpften Bedingungen, zum Beispiel Druck- und Temperaturschwankungen, Witterung und Wetterverhältnisse, aber auch insbesondere stark wechselnde Windverhältnisse, sowie durch die Vielzahl von gesetzlich vorgeschriebenen Sicherheitsmaßnahmen sind die Überwachung und die für die Überwachung notwendigen Sensoren einer Vielzahl von Randbedingungen unterworfen. Zum Beispiel kann im Betrieb eine Druckvariation an den Rotorblättern 100 auftreten. Hierbei kann eine Instabilität entlang der Rotorblattachse 101 auftreten, welche den Betrieb der Windkraftanlage stört und die Energieausbeute verringert. Ferner besteht die Möglichkeit, dass es in einzelnen Rotorblättern zu einer Druckänderung und damit zu Vibrationen bzw. Oszillationen kommt. Dies führt in vielen Fällen zu kritischen Betriebszuständen, welche aufwändige Steuerungs- und/oder Regelungs-Maßnahmen erfordern. Ferner kann durch eine Dehnungs- bzw. Stauchungsmessung direkt am Rotorblatt eine für eine Energieausbeute effiziente Einstellung eines Pitch-Winkels aufgefunden werden.

Jedes Rotorblatt 100 kann separat eine individuelle Dehnungs- bzw. Stauchungsverteilung aufweisen. Daher wird gemäß manchen Ausführungsformen, die mit anderen Ausführungsformen kombiniert werden können, mindestens ein faseroptischer Sensor 110 in jedem Rotorblatt 100 zur Verfügung gestellt.

Gemäß einigen der hier beschriebenen Ausführungsformen, die mit anderen Ausführungsformen kombiniert werden können, ermöglichen faseroptische Sensoren 110, bei welchen ein Signal optisch über einen Lichtleiter 112 übertragen wird, eine bisher in der Praxis als ungünstig angesehene radiale Montageposition entlang einer Längserstreckung des Rotorblatts 100, da die Übertragung mittels eines Lichtleiters 112 bzw. einer optischen Faser ein reduziertes Risiko eines Blitzschadens mit sich bringt. Daher können faseroptische Sensoren 110 derart zur Verfügung gestellt werden, dass sie eine Montage in einem radial äußeren Bereich 107 eines Rotorblatts 110 erlauben, ohne das Risiko eines Blitzschadens zu erhöhen.

Figur 5 zeigt ein typisches Messsystem zur faseroptischen Dehnungs- bzw. Stauchungsmessung gemäß den hierin beschriebenen Ausführungsformen. Das System enthält einen oder mehrere faseroptische Sensoren 110. Das System weist eine Quelle 602 für elektromagnetische Strahlung, zum Beispiel eine Primärlichtquelle, auf. Die Quelle 602 dient zur Bereitstellung von optischer Strahlung, mit welcher mindestens ein faseroptischer Sensor 110 bestrahlt werden kann. Zu diesem Zweck ist eine optische Übertragungsfaser bzw. ein Lichtleiter 603 zwischen der Primärlichtquelle 602 und einem ersten Faserkoppler 604 bereitgestellt. Der Faserkoppler 604 koppelt das Primärlicht in die optische Faser bzw. den Lichtleiter 112 ein. Die Quelle 602 kann zum Beispiel eine Breitbandlichtquelle, einen Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das Sensorelement 111, wie zum Beispiel ein optisches Faser-Bragg-Gitter, ist an die Sensorfaser 112 optisch angekoppelt. Das von den faseroptischen Sensoren 110 zurückgeworfene Licht wird wiederum über den Faserkoppler 604 geleitet, welcher das Licht über die Übertragungsfaser 605 in einen Strahlteiler 606 leitet. Der Strahlteiler 606 teilt das zurückgeworfene Licht auf zur Detektion mittels eines ersten Detektors 607 und eines zweiten Detektors 608. Hierbei wird das auf dem zweiten Detektor 608 detektierte Signal zunächst mit einer optischen Filtereinrichtung 609 gefiltert. Durch die Filtereinrichtung 609 kann eine Wellenlängenverteilung eines aus dem Sensorelement 111 ausgegebenen optischen Signals analysiert werden.

Im Allgemeinen kann ein Messsystem, wie es in Figur 5 dargestellt ist, ohne den Strahlteiler 606 bzw. den Detektor 607 zur Verfügung gestellt sein. Der Detektor 607 ermöglicht jedoch eine Normierung des Messsignals des faseroptischen Sensors 110 in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, Schwankungen durch Reflexionen an Schnittstellen zwischen dem Lichtleiter 112 und Auswerteeinheit 114 oder andere Intensitätsschwankungen. Diese Normierung verbessert die Messgenauigkeit und reduziert beim Betrieb des Messsystems eine Abhängigkeit von der Länge der zwischen der Auswerteeinheit 114 und dem faseroptischen Sensor 110 zur Verfügung gestellten Lichtleiter 112.

Die optische Filtereinrichtung 609 bzw. zusätzliche optische Filtereinrichtungen zur Filterung des aus dem Sensorelement 111 ausgegebenen optische Reflexionssignals können einen optischen Filter umfassen, der gewählt ist aus der Gruppe, welche besteht aus einem Kantenfilter, einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

Figur 6 zeigt eine Auswerteeinheit 114, wobei ein Signal eines faseroptischen Sensors 110 über einen Lichtleiter 112 zur Auswerteeinheit 114 geführt wird. In Figur 6 ist weiterhin eine Lichtquelle 602 dargestellt, die optional in der Auswerteeinheit zur Verfügung gestellt werden kann. Die Lichtquelle 602 kann aber auch unabhängig bzw. außerhalb von der Auswerteeinheit 114 zur Verfügung gestellt sein. Das optische Signal des faseroptischen Sensors 110 wird mit einem Detektor, d.h. mit einem opto-elektrischen Wandler 702 in ein elektrisches Signal gewandelt. Das elektrische Signal wird mit einem analogen Anti-Aliasing-Filter 703 gefiltert. Im Anschluss an die analoge Filterung mit dem analogen Anti-Aliasing-Filter bzw. Tiefpassfilter 703 wird das Signal durch einen Analog-Digital-Wandler 704 digitalisiert.

Gemäß einigen hier beschriebenen Ausführungsformen, die mit anderen Ausführungsformen kombiniert werden können, ermöglicht es die Auswerteeinheit 114, Dehnungen und/oder Stauchungen eines Messobjekts, auf welchem der Zwischenträger 500 der Einspannvorrichtung 300 angebracht ist, auf Grundlage des aus dem faseroptischen Sensorelement 111 ausgegebenen Reflexionssignals zu ermitteln. Der Anti-Aliasing-Filter kann eine Grenzfrequenz von 1 kHz oder kleiner insbesondere von 500 Hz oder kleiner, weiterhin insbesondere von 100 Hz oder kleiner aufweisen. Gemäß hier beschriebenen Ausführungsformen findet eine solche Filterung vor der Digitalisierung statt. Gemäß hier beschriebenen Ausführungsformen findet eine analoge Tiefpassfilterung vor einer Digitalisierung eines Signals eines faseroptischen Sensors 110 statt. Gemäß hier beschriebenen Ausführungsformen, die mit anderen Ausführungsformen kombiniert werden können, kann der Tiefpassfilter auch als ein analoger anti-aliasing Filter bezeichnet werden. Hierbei wird im Rahmen eines Abtasttheorems die Nyquist-Frequenz berücksichtigt, und eine Tiefpassfilterung mit Signalanteilen kleiner der Nyquist-Frequenz mittels des analogen Tiefpass-Filters bzw. analogen anti-aliasing Filters zur Verfügung gestellt. Durch die hier beschriebenen Ausführungsformen mit einem faseroptischen Sensor 110 und einer analogen Tiefpassfilterung kann eine verbesserte Messung von Dehnungen und/oder Stauchungen eines Messobjekts zur Verfügung gestellt werden. Figur 6 zeigt ferner eine digitale Auswerteeinheit 706, die zum Beispiel eine CPU, Speicher und andere Elemente zur digitalen Datenverarbeitung beinhalten kann.

Wie in Bezug auf Figur 6 erläutert, kann ein Verfahren zur Dehnungs- bzw. Stauchungserfassung mittels des faseroptischen Sensors 110 verbessert werden. Zum Beispiel ist eine Auswerteeinheit 114 zur Verfügung gestellt. Die Auswerteeinheit 114 kann einen Wandler zum Wandeln des optischen Signals in ein elektrisches Signal beinhalten. Zum Beispiel kann eine Fotodiode, ein Photomultiplier (PM) oder ein anderer optoelektronischer Detektor als Wandler verwendet werden. Die Auswerteeinheit 114 beinhaltet ferner einen Anti-Aliasing-Filter 703, der zum Beispiel mit dem Ausgang des Wandlers bzw. des opto-elektronischen Detektors verbunden ist. Die Auswerteeinheit 114 kann ferner einen Analog-digital-Wandler 704 beinhalten, der mit dem Ausgang des Anti-Aliasing-Filters 703 verbunden ist. Die Auswerteeinheit 114 kann darüber hinaus eine digitale Auswerteeinheit 706 beinhalten, die zur Auswertung der digitalisierten Signale eingerichtet ist.

Gemäß noch weiteren Ausführungsformen, die mit hier beschriebenen Ausführungsformen kombiniert werden können, kann eine Temperaturkompensation in dem faseroptischen Sensor 110 derart bereitgestellt werden, dass für den Zwischenträger 500 und/oder die Befestigungselemente 301, 302 Materialien mit einem sehr geringen thermischen Ausdehnungskoeffizienten verwendet werden.

Gemäß Ausführungsformen kann der Lichtleiter 112 zum Beispiel eine Glasfaser, eine optische Faser oder ein Polymerleiter sein, wobei Materialien wie optische Polymere, Polymethylmethacrylat, Polycarbonat, Quarzglas, Ethylen-Tetrafluorethylen verwendet werden können, die gegebenenfalls dotiert sind. Insbesondere kann die optische Faser als eine SMF-28 Faser ausgebildet sein.

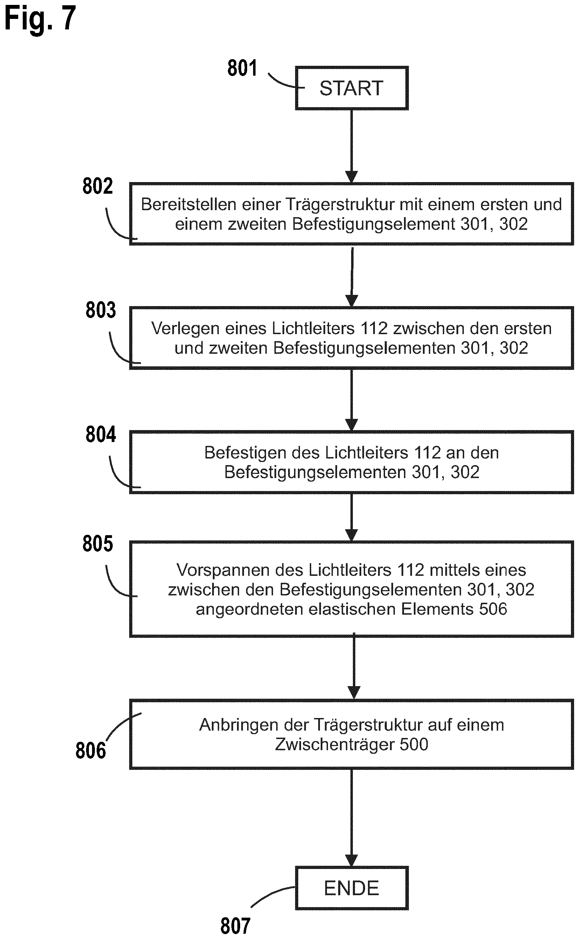

Figur 7 zeigt ein Ablaufdiagramm zur Veranschaulichung eines Verfahrens zum Herstellen eines faseroptischen Sensors 110 zum Messen von Dehnungen und/oder Stauchungen eines zu überwachenden Messobjekts, gemäß hier beschriebenen Ausführungsformen. Im Einzelnen beinhaltet das Verfahren zum Herstellen des Sensors 110 die folgenden Blöcke 801 bis 807. Die Herstellungsprozedur wird in einem Block 801 gestartet. Anschließend erfolgt in einem Block 802 ein Bereitstellen einer Trägerstruktur mit einem ersten und einem zweiten Befestigungselement 301, 302. In einem darauf folgenden Block 803 wird ein Lichtleiter 112 zwischen den ersten und zweiten Befestigungselementen 301, 302 verlegt, indem er beispielsweise in dafür vorgesehene Nuten an den Befestigungselementen 301,302 eingelegt wird. Schließlich erfolgte ein Befestigen des Lichtleiters 112 an den Befestigungselementen 301, 302 (Block 804).

Der Lichtleiter 112 kann nun mittels eines zwischen den Befestigungselementen 301, 302 angeordneten elastischen Elements 506 vorgespannt werden, siehe Block 805. Nach einem Anbringen der Trägerstruktur auf einem Zwischenträger 500 in einem Block 806 wird die Herstellungsprozedur in dem Block 807 beendet.

Somit wird ein faseroptischer Sensor 110 zum Messen von Dehnungen und/oder Stauchungen eines zu überwachenden Messobjekts bereitgestellt. Der Sensor 110 beinhaltet einen Lichtleiter 112 mit einem Faser-Bragg-Gitter 111, wobei der Lichtleiter 112 in einer Einspannvorrichtung 300 eingespannt ist. Die Einspannvorrichtung 300 wiederum beinhaltet eine Trägerstruktur, welche ein erstes Befestigungselement 301 zur Befestigung des Lichtleiters 112 an einer ersten Position 401 und ein von dem ersten Befestigungselement 301 beabstandetes zweites Befestigungselement 302 zur Befestigung des Lichtleiters 112 an einer zweiten Position 401 aufweist, wobei die ersten und zweiten Positionen 401, 402 einen ersten Abstand 403 in einer Längserstreckung des Lichtleiters 112 aufweisen. Ferner ist ein Zwischenträger 500 mit einer ersten Fläche 503, auf welchem die ersten und zweiten Befestigungselemente 301, 302 an jeweiligen Befestigungspositionen 501, 502 angebracht sind, und einer gegenüberliegenden zweiten Fläche 504 bereitgestellt, welche an einem Messobjekt anbringbar ist. Hierbei ist ein zweiter Abstand 505 der Befestigungspositionen 501, 502 der Befestigungselemente 301, 302 auf dem Zwischenträger 500 in einer Längsrichtung des Lichtleiters 112 größer ist als der erste Abstand 403.

Weitere Anwendungen des faseroptischen Sensors 110 bestehen auf dem Gebiet der Vibrationsmessung. Durch die Detektion von Dehnungen und Stauchungen werden beispielsweise Luftschall- oder Köperschall-Vibrationen erfassbar. Derartige, mit dem faseroptischen Sensor 110 gemäß hierin beschriebenen Ausführungsformen erfassbare Vibrationen können Frequenzen in einem Bereich von 1 kHz oder höher, in typischer Weise in einem Bereich von 5 kHz oder höher aufweisen.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

**Patentansprüche**

1.  Einspannvorrichtung (300) für einen Lichtleiter (112), umfassend:

    eine Trägerstruktur, welche aufweist:

    ein erstes Befestigungselement (301) zur Befestigung des Lichtleiters (112) an einer ersten Position (401);
    ein von dem ersten Befestigungselement (301) beabstandetes zweites Befestigungselement (302) zur Befestigung des Lichtleiters (112) an einer zweiten Position (402), wobei die ersten und zweiten Positionen (401, 402) einen ersten Abstand (403) in einer Längserstreckung des Lichtleiters (112) aufweisen; und wobei die Vorrichtung (300) ausgelegt ist, ein an der Trägerstruktur angebrachtes Faser-Bragg-Gitter derart vorzuspannen, dass dieses sowohl Dehnungen als auch Stauchungen detektiert; und

    einen Zwischenträger (500) mit einer ersten Fläche (503), auf welcher die ersten und zweiten Befestigungselemente (301, 302) an jeweiligen Befestigungspositionen (501, 502) angebracht sind, und einer gegenüberliegenden zweiten Fläche (504), welche an einem Messobjekt anbringbar ist,

    wobei ein zweiter Abstand (505) der Befestigungspositionen (501, 502) der Befestigungselemente (301, 302) auf dem Zwischenträger (500) in einer Längsrichtung des Lichtleiters (112) größer ist als der erste Abstand (403), wobei eine thermische Ausdehnung des Zwischenträgers (500) zumindest teilweise durch eine thermische Ausdehnung der Trägerstruktur kompensiert wird;
    wobei der Zwischenträger (500) aus CFK, GFK, oder Kunststoff ausgeführt ist;
    und wobei die Befestigungselemente (301, 302) zusammen mit dem Zwischenträger (500) eine Wandlerstruktur mit einer hebelfreien mechanischen Signalverstärkungsanordnung ausbilden, welche derart ausgelegt ist, dass eine auf den Lichtleiter (112) aufgebrachte relative Längenänderung ($\varepsilon$) größer ist als eine auf den Zwischenträger (500) aufgebrachte relative Längenänderung (E).

2.  Einspannvorrichtung (300) nach Anspruch 1, wobei die Trägerstruktur ferner mindestens ein zwischen den ersten und zweiten Befestigungselementen (301, 302) angeordnetes elastisches Element (506) umfasst, welches ausgelegt ist, einen an den Befestigungselementen (301, 302) befestigten Lichtleiter (112) in Längsrichtung vorzuspannen.

3.  Einspannvorrichtung (300) nach Anspruch 1 oder 2, wobei die Trägerstruktur ausgelegt ist zur Aufnahme eines Lichtleiters (112), welcher mindestens ein zwischen den Befestigungselementen (301, 302) positionierbares Faser-Bragg-Gitter aufweist.

4.  Einspannvorrichtung (300) nach einem der Ansprüche 1 bis 3, wobei die Trägerstruktur aus einem metallischen Material ausgeführt ist.

5. Einspannvorrichtung (300) nach einem der Ansprüche 1 bis 4, wobei der erste Abstand (403), der zweite Abstand (505), ein Material der Trägerstruktur und ein Material des Zwischenträgers (500) derart gewählt sind, dass eine passive Temperaturkompensation für einen an der Trägerstruktur befestigten faseroptischen Sensor bereitgestellt wird, insbesondere wobei der thermische Ausdehnungskoeffizient der Trägerstruktur und der thermische Ausdehnungskoeffizient des Zwischenträgers (500) derart ausgelegt sind, dass die passive Temperaturkompensation für einen an der Trägerstruktur befestigten faseroptischen Sensor bereitgestellt wird.

6. Einspannvorrichtung nach (300) einem der Ansprüche 2 bis 5, wobei das elastische Element (506) ausgelegt ist, ein an der Trägerstruktur angebrachtes Faser-Bragg-Gitter derart vorzuspannen, dass dieses sowohl Dehnungen als auch Stauchungen detektiert.

7. Einspannvorrichtung (300) nach einem der Ansprüche 1 bis 6, wobei mindestens eines der Befestigungselemente (301, 302) eine Aussparung zum Einlegen und Fixieren des Lichtleiters (112) aufweist.

8. Einspannvorrichtung (300) nach einem der Ansprüche 2 bis 7, wobei die Trägerstruktur zusammen mit dem elastischen Element (506) einstückig ausgeführt ist.

9. Sensor zum Messen von Dehnungen und/oder Stauchungen eines zu überwachenden Messobjekts, umfassend:

   eine Einspannvorrichtung (300) nach einem der Ansprüche 1 bis 8; und
   einen Lichtleiter (112) mit einem Faser-Bragg-Gitter.

10. Sensor nach Anspruch 9, weiterhin umfassend:
    ein Abdeckelement (303), wobei die Trägerstruktur zwischen dem Zwischenträger (500) und dem Abdeckelement (303) zur Verfügung gestellt ist.

11. Verfahren zur Herstellung eines Sensors zum Messen von Dehnungen und/oder Stauchungen eines zu überwachenden Messobjekts, umfassend:

    Bereitstellen einer Trägerstruktur mit einem ersten und einem zweiten Befestigungselement (301, 302);
    Verlegen eines Lichtleiters (112) zwischen den ersten und zweiten Befestigungselementen (301, 302);
    Befestigen des Lichtleiters (112) an einer ersten Position (401) des ersten Befestigungselements (301) und an einer zweiten Position (402) des zweiten Befestigungselements (302);
    Vorspannen des Lichtleiters (112) mittels eines zwischen den Befestigungselementen (301, 302) angeordneten elastischen Elements (506); und
    Anbringen der Trägerstruktur auf einem Zwischenträger (500), derart, dass ein zweiter Abstand (505) der Befestigungspositionen (501, 502) der Befestigungselemente (301, 302) auf dem Zwischenträger (500) in einer Längsrichtung des Lichtleiters (112) größer ist als ein erster Abstand (403) zwischen der ersten Position (401) und der zweiten Position (402); wobei eine thermische Ausdehnung des Zwischenträgers (500) zumindest teilweise durch eine thermische Ausdehnung der Trägerstruktur kompensiert wird; wobei der Zwischenträger (500) aus CFK, GFK, oder Kunststoff ausgeführt ist; und wobei die Befestigungselemente (301, 302) zusammen mit dem Zwischenträger (500) eine Wandlerstruktur mit einer hebelfreien mechanischen Signalverstärkungsanordnung ausbilden, welche derart ausgelegt ist, dass eine auf das Sensorelement (111) aufgebrachte relative Längenänderung ($\varepsilon$) größer ist als eine auf den Zwischenträger (500) aufgebrachte relative Längenänderung (E).

12. Verfahren nach Anspruch 11, wobei der Lichtleiter (112) mit den Befestigungselementen (301, 302) verklebt wird.

13. Verfahren nach einem der Ansprüche 11 bis 12, wobei das Anbringen der Trägerstruktur auf dem Zwischenträger (500) und/oder das Anbringen des Zwischenträgers (500) auf dem zu überwachenden Messobjekt mittels Kleben, Löten, Bondieren oder Laserschweißen durchgeführt wird.

14. Verfahren nach einem der Ansprüche 11 bis 14, wobei das Vorspannen des Lichtleiters (112) ein Erfassen einer Stauchung und/oder ein Erfassen eines Ablösens des Lichtleiters (112) von einem Befestigungselement (301, 302) bereitstellt.

**Claims**

1.  Clamping device (300) for a light guide (112), comprising
    a support structure having:

    a first fastening element (301) for fastening the light guide (112) in a first position (401);
    a second fastening element (302) spaced apart from the first fastening element (301) for fastening the light guide (112) in a second position (402), wherein the first and second positions (401, 402) have a first distance (403) in a longitudinal extension of the light guide (112); and
    wherein the device (300) is configured for pre-tensioning a fibre Bragg grating attached to the support structure in such a manner that the fibre Bragg grating detects both strains and compressions;
    and
    an intermediate support (500) with a first surface (503), to which the first and second fastening elements (301, 302) are attached at respective fastening positions (501, 502), and an opposite second surface (504), which can be attached to a measurement object,
    wherein a second distance (505) of the fastening positions (501, 502) of the fastening elements (301, 302) on the intermediate support (500) in a longitudinal direction of the light guide (112) is greater than the first distance (403), wherein a thermal expansion of the intermediate support (500) is at least partially compensated for by a thermal expansion of the support structure;
    wherein the intermediate support (500) is made of CFRP, GRP, or plastic;
    and wherein the fastening elements (301, 302) together with the intermediate support (500) form a converter structure having a lever-free mechanical signal amplification arrangement, which is configured such that a relative change in length ($\varepsilon$) applied to the light guide (112) is greater than a relative change in length (E) applied to the intermediate support (500).

2.  Clamping device (300) according to claim 1, wherein the support structure further comprises at least one elastic element (506) arranged between the first and second fastening elements (301, 302), which elastic element (506) is configured for pre-tensioning a light guide (112) attached to the fastening elements (301, 302) in the longitudinal direction.

3.  Clamping device (300) according to claim 1 or 2, wherein the support structure is configured for accommodating a light guide (112) which has at least one fibre Bragg grating which can be positioned between the fastening elements (301, 302).

4.  Clamping device (300) according to any one of claims 1 to 3, wherein the support structure is made of a metallic material.

5.  Clamping device (300) according to any one of claims 1 to 4, wherein the first distance (403), the second distance (505), a material of the support structure and a material of the intermediate support (500) are selected such that a passive temperature compensation is provided for a fibre optic sensor fastened to the support structure, in particular wherein the thermal expansion coefficient of the support structure and the thermal expansion coefficient of the intermediate support (500) are configured such that the passive temperature compensation is provided for a fibre optic sensor fastened to the support structure.

6.  Clamping device (300) according to any one of claims 2 to 5, wherein the elastic element (506) is configured for pre-tensioning a fibre Bragg grating attached to the support structure in such a manner that the fibre Bragg grating detects both strains and compressions.

7.  Clamping device (300) according to any one of claims 1 to 6, wherein at least one of the fastening elements (301, 302) has a recess for inserting and securing the light guide (112).

8.  Clamping device (300) according to any one of claims 2 to 7, wherein the support structure is configured integrally with the elastic element (506).

9.  Sensor for measuring strains and/or compressions of a measurement object to be monitored, comprising:

    a clamping device (300) according to any one of claims 1 to 8; and
    a light guide (112) with a fibre Bragg grating.

10. Sensor according to claim 9, further comprising:
a covering element (303), wherein the support structure is provided between the intermediate support (500) and the covering element (303).

11. Method for producing a sensor for measuring strains and/or compressions of a measurement object to be monitored, comprising:

providing a support structure with a first and a second fastening element (301, 302);
installing a light guide (112) between the first and second fastening elements (301, 302);
fastening the light guide (112) in a first position (401) of the first fastening element (301) and in a second position (402) of the second fastening element (302) ;
pre-tensioning the light guide (112) by means of an elastic element (506) arranged between the fastening elements (301, 302); and
attaching the support structure to an intermediate support (500), such that a second distance (505) of the fastening positions (501, 502) of the fastening elements (301, 302) on the intermediate support (500) in a longitudinal direction of the light guide (112) is greater than a first distance (403) between the first position (401) and the second position (402);
wherein a thermal expansion of the intermediate support (500) is at least partially compensated for by a thermal expansion of the support structure;
wherein the intermediate support (500) is made of CFRP, GRP, or plastic;
and wherein the fastening elements (301, 302) together with the intermediate support (500) form a converter structure having a lever-free mechanical signal amplification arrangement, which is configured such that a relative change in length ($\varepsilon$) applied to the sensor element (111) is greater than a relative change in length (E) applied to the intermediate support (500) .

12. Method according to claim 11, wherein the light guide (112) is glued to the fastening elements (301, 302).

13. Method according to any one of claims 11 to 12, wherein attaching the support structure to the intermediate support (500) and/or attaching the intermediate support (500) to the measurement object to be monitored is carried out by means of gluing, soldering, bonding or laser welding.

14. Method according to any one of claims 11 to 14, wherein the pre-tensioning of the light guide (112) provides a detection of a strain and/or a detection of a detachment of the light guide (112) from a fastening element (301, 302) .

**Revendications**

1. Dispositif de serrage (300) pour un guide de lumière (112) comprenant:

une structure de support, qui présente:

un premier élément de fixation (301) pour fixer le guide de lumière (112) à une première position (401) ;
un deuxième élément de fixation (302) espacé du premier élément de fixation (301) pour fixer le guide de lumière (112) à une deuxième position (402), dans lequel la première et la deuxième positions (401, 402) présentent un premier espacement (403) dans une extension longitudinale du guide de lumière (112); et dans lequel le dispositif (300) est conçu pour être serré sur le réseau de Bragg à fibre monté sur la structure de support de manière à détecter à la fois l'expansion et la compression; et
un support intermédiaire (500) ayant une première surface (503) sur laquelle les premier et deuxième éléments de fixation (301, 302) sont fixés à des positions de fixation respectives (501, 502), et une deuxième surface opposée (504) qui peut être fixée à un objet de mesure,

dans lequel un deuxième espacement (505) des positions de fixation (501, 502) des éléments de fixation (301, 302) sur le support intermédiaire (500) dans une direction longitudinale du guide de lumière (112) est supérieur au premier espacement (403), dans lequel une dilatation thermique du support intermédiaire (500) est au moins partiellement compensée par une dilatation thermique de la structure porteuse;
dans lequel le support intermédiaire (500) est constitué de CFRP, de GFRP ou de plastique;
et dans lequel les éléments de fixation (301, 302) conjointement au support intermédiaire (500) forment une structure de transducteur avec un agencement d'amplification de signal mécanique sans levier qui est conçu de telle sorte qu'un changement de longueur relatif (ε) soit supérieur à un changement relatif de longueur appliqué au support intermédiaire (500).

2. Dispositif de serrage (300) selon la revendication 1, dans lequel la structure de support comprend en outre au moins un élément élastique (506) disposé entre les premier et deuxième éléments de fixation (301, 302), lequel élément élastique (506) est conçu afin de serrer un guide de lumière (112) fixé aux éléments de fixation (301, 302) dans le sens longitudinal.

3. Dispositif de serrage (300) selon la revendication 1 ou 2, dans lequel la structure de support est conçue afin de recevoir un guide de lumière (112) qui comporte au moins un réseau de Bragg à fibre pouvant être positionné entre les éléments de fixation (301, 302).

4. Dispositif de serrage (300) selon une des revendications 1 à 3, dans lequel la structure de support est réalisée en un matériau métallique.

5. Dispositif de serrage (300) selon une des revendications 1 à 4, dans lequel le premier espacement (403), le deuxième espacement (505), un matériau de la structure de support et un matériau du support intermédiaire (500) sont choisis de telle sorte qu'une compensation de température passive pour un capteur à fibre optique fixé à la structure de support soit prévue, en particulier dans lequel le coefficient de dilatation thermique de la structure de support et le coefficient de dilatation du support intermédiaire (500) sont conçus de telle sorte que la compensation passive de température soit prévue pour un capteur à fibre optique fixé à la structure de support.

6. Dispositif de serrage (300) selon une des revendications 2 à 5, dans lequel l'élément élastique (506) est conçu afin de serrer un réseau de Bragg à fibre fixé à la structure de support de manière à détecter à la fois la dilatation et la compression.

7. Dispositif de serrage (300) selon une des revendications 1 à 6, dans lequel au moins un des éléments de fixation (301, 302) présente un évidement pour insérer et fixer le guide de lumière (112).

8. Dispositif de serrage (300) selon une des revendications 2 à 7, dans lequel la structure de support est réalisée en un seul tenant avec l'élément élastique (506).

9. Capteur pour mesurer l'expansion et/ou la compression d'un objet à surveiller, comprenant:

   un gabarit (300) selon une quelconque des revendications 1 à 8; et
   un guide de lumière (112) avec un réseau de Bragg à fibre.

10. Capteur selon la revendication 9, comprenant en outre:
    un élément de couverture (303), la structure de support étant prévue entre le support intermédiaire (500) et l'élément de couverture (303).

11. Procédé de production d'un capteur pour mesurer l'expansion et/ou la compression d'un objet de mesure à surveiller, comprenant de:

    fournir une structure de support avec un premier et un deuxième élément de fixation (301, 302);
    poser un guide de lumière (112) entre le premier et le deuxième éléments de fixation (301, 302);
    fixer le guide de lumière (112) à une première position (401) du premier élément de fixation (301) et à une deuxième position (402) du deuxième élément de fixation (302);
    serrer le guide de lumière (112) au moyen d'un élément élastique agencé (506) entre les éléments de fixation (301, 302) ; et
    fixer la structure porteuse à un support intermédiaire (500) de telle sorte qu'un deuxième espacement (505) entre les positions de fixation (501, 502) des éléments de fixation (301, 302) sur le support intermédiaire (500) dans une direction longitudinale du guide de lumière (112) soit supérieur à un premier espacement (403) entre la première position (401) et la deuxième position (402);
    dans lequel une dilatation thermique du support intermédiaire (500) est au moins partiellement compensée par une dilatation thermique de la structure de support
    dans lequel le support intermédiaire (500) est constitué de CFRP, de GFRP ou de plastique;

et dans lequel les éléments de fixation (301, 302) conjointement au support intermédiaire (500) forment une structure de transducteur avec un agencement d'amplification de signal mécanique sans levier, qui est conçu de telle sorte qu'un changement relatif de longueur ($\varepsilon$) appliqué à l'élément capteur (111) soit supérieur à un changement relatif de longueur (E) appliqué au support intermédiaire (500).

12. Procédé selon la revendication 11, dans lequel le guide de lumière (112) est collé sur les éléments de fixation (301,302).

13. Procédé selon une quelconque des revendications 11 à 12, dans lequel la fixation de la structure du support sur le support intermédiaire (500) et/ou la fixation du support intermédiaire (500) à l'objet à surveiller est réalisée au moyen d'un collage, brasage, collage ou soudage laser.

14. Procédé selon une quelconque des revendications 11 à 14, dans lequel la polarisation du guide de lumière (112) fournit une détection d'une compression et/ou une détection d'un détachement du guide de lumière (112) d'un élément de fixation (301, 302).

# Fig. 1

# Fig. 2

**Fig. 3A**

110

401  111  113  402  115

112

506

**Fig. 3B**

112

110  303  506

507  113

507

EP 3 353 501 B1

# Fig. 4

## Fig. 5

## Fig. 6

# Fig. 7

**801** — START

**802** — Bereitstellen einer Trägerstruktur mit einem ersten und einem zweiten Befestigungselement 301, 302

**803** — Verlegen eines Lichtleiters 112 zwischen den ersten und zweiten Befestigungselementen 301, 302

**804** — Befestigen des Lichtleiters 112 an den Befestigungselementen 301, 302

**805** — Vorspannen des Lichtleiters 112 mittels eines zwischen den Befestigungselementen 301, 302 angeordneten elastischen Elements 506

**806** — Anbringen der Trägerstruktur auf einem Zwischenträger 500

**807** — ENDE

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0135133 A1
- DE 19922102 A1
- EP 1679497 A1
- EP 2295946 A1